# FASCICULE DE BREVET EUROPEEN

(11) **EP 1 141 903 B1**
(45) Date de publication et mention de la délivrance du brevet: **02.08.2006**
(21) Numéro de dépôt: 99958279.4
(22) Date de dépôt: 08.12.1999
(51) Int. Cl.: G07F 7/10

(54) **DISPOSITIF ET PROCEDE D'INITIALISATION D'UN PROGRAMME APPLICATIF D'UNE CARTE A CIRCUIT INTEGRE**
VERFAHREN UND VORRICHTUNG ZUR INITIALISIERUNG EINES ANWENDUNGSPROGRAMMES EINER CHIPKARTE
DEVICE AND METHOD FOR INITIALISING AN APPLICATIVE PROGRAMME OF AN INTEGRATED CIRCUIT CARD

(30) Priorité: 08.12.1998 FR 9815493
(43) Date de publication de la demande: 10.10.2001
(73) Titulaire: Axalto S.A., 92120 Montrouge (FR)
(72) Inventeur: BURIANNE, Yannick, F-92140 Clamart (FR)
(74) Mandataire: Cour, Pierre
(86) Numéro de dépôt international: PCT/FR1999/003065
(87) Numéro de publication internationale: WO 2000/034927

(56) Documents cités:
- EP-A- 0 540 095
- EP-A- 0 674 290
- FR-A- 2 759 795
- US-A- 5 019 970
- US-A- 5 515 532
- PATENT ABSTRACTS OF JAPAN vol. 098, no. 003, 27 février 1998 (1998-02-27) & JP 09 305734 A (DAINIPPON PRINTING CO LTD), 28 novembre 1997 (1997-11-28)

## Description

La présente invention concerne un dispositif à circuit intégré comprenant une mémoire et au moins un programme applicatif résident dans ladite mémoire. Elle concerne également un procédé d'initialisation d'un programme applicatif d'un tel dispositif.

Lesdits dispositifs sont en particulier des objets portatifs appelés cartes à puce comprenant des programmes applicatifs concernant le domaine de la santé, de la téléphonie mobile, ou encore, concernant le domaine bancaire.

Lesdites cartes à puce comportent un corps de carte dans lequel est intégré un module électronique contenant de manière classique un élément de commande (par exemple une unité centrale de traitement ou CPU) et une mémoire. Ladite mémoire comporte au moins un programme applicatif contenant des éléments unitaires auxquels on affecte des valeurs afin que le programme puisse être exécuté, lesdits éléments n'étant pas modifiés lors de l'exécution dudit programme applicatif. Ces éléments sont appelés variables configurables (voir EP-A-0540095).

En vue de configurer lesdites variables, l'état de la technique propose des dispositifs qui prévoient des fichiers contenant des données qui sont affectées aux variables lors d'une phase dite d'initialisation. Cette phase d'initialisation est nécessaire au bon déroulement du programme applicatif. A cet effet, lesdits dispositifs comportent un moyen de commande qui permet de modifier les valeurs desdites données d'initialisation dans lesdits fichiers et ensuite d'affecter ces données auxdites variables. Lorsque ces variables sont stockées en mémoire de façon permanente, elles conservent leur valeur d'initialisation même si la carte n'est plus alimentée en tension.

Bien que ces dispositifs permettent de configurer un programme applicatif, les valeurs d'initialisation sont dupliquées dans deux espaces mémoire de tailles quasi identiques, l'un contenant les fichiers de données d'initialisation et l'autre étant l'espace alloué pour les variables qui sont initialisées avec lesdites données, ce qui peut être gênant du fait de la taille limitée de la mémoire des cartes à puce. De plus, le temps d'exécution dudit programme applicatif est sensiblement accru du fait notamment de la nécessité d'effectuer ladite phase d'initialisation lors de chaque exécution du programme même si les valeurs d'initialisation n'ont pas changées car ladite phase d'initialisation fait partie intégrante du programme applicatif. Enfin, il existe des cas où, soit le programme applicatif ne possède aucun privilège pour accéder auxdits fichiers, soit ladite carte ne possède tout simplement aucun fichier.

Aussi un problème technique à résoudre par l'objet de la présente invention est de proposer un dispositif à circuit intégré comprenant une mémoire et au moins un programme applicatif résident dans ladite mémoire, ainsi qu'un procédé d'initialisation d'un programme applicatif d'un tel dispositif, qui permettraient, d'une part, de configurer un programme applicatif sans avoir de duplication de données et ainsi éviter des pertes d'espace mémoire dues aux fichiers précités, et, d'autre part, d'éviter d'augmenter le temps d'exécution dudit programme applicatif .

Une solution au problème technique posé se caractérise, selon un premier objet de la présente invention, en ce que ledit programme applicatif comprend au moins une variable configurable et une liste d'au moins un élément référence, et en ce que ladite mémoire comporte, d'une part, au moins un moyen d'initialisation desdites variables, ledit moyen étant paramétré par plusieurs paramètres dont l'un des paramètres est ladite liste d'éléments références, et, d'autre part, une commande permettant d'envoyer des données contenant en particulier des valeurs à affecter aux variables configurables.

Selon un second objet de la présente invention, cette solution se caractérise en ce que le procédé d'initialisation comporte les étapes consistant à :
- créer, dans ledit programme applicatif, au moins une variable configurable et une liste d'au moins un élément référence,
- envoyer des données contenant en particulier des valeurs à affecter aux variables configurables,
- initialiser lesdites variables grâce à un moyen d'initialisation, ledit moyen étant paramétré par plusieurs paramètres dont l'un des paramètres est ladite liste d'éléments références.

Ainsi, comme on le verra en détail plus loin, le dispositif de l'invention permet d'avoir une gestion optimisée de la mémoire de la carte et une configuration directe des variables d'un programme applicatif grâce à la commande qui permet de modifier les valeurs affectées aux variables configurables et grâce également à la liste d'éléments références passée en paramètre du moyen d'initialisation, liste qui permet d'établir un lien entre les valeurs envoyées par ladite commande et les variables du programme applicatif à configurer.

La description qui va suivre au regard des dessins annexés, donnée à titre d'exemple non limitatif, fera bien comprendre en quoi consiste l'invention et comment elle peut être réalisée.
La figure 1 est un schéma d'un dispositif à circuit intégré, ici une carte à puce.
La figure 2 est un schéma d'une mémoire de la carte de la figure 1.
La figure 3 est un schéma d'un programme applicatif de la carte de la figure 1.
La figure 4 est un schéma d'une commande de la carte de la figure 1.
La figure 5 est un schéma d'une liste d'éléments d'un programme applicatif de la mémoire de la figure 2.
La figure 6 est un autre schéma de la mémoire de la carte de la figure 1.
La figure 7 est un schéma montrant des variables contenues dans le programme applicatif de la figure 3.

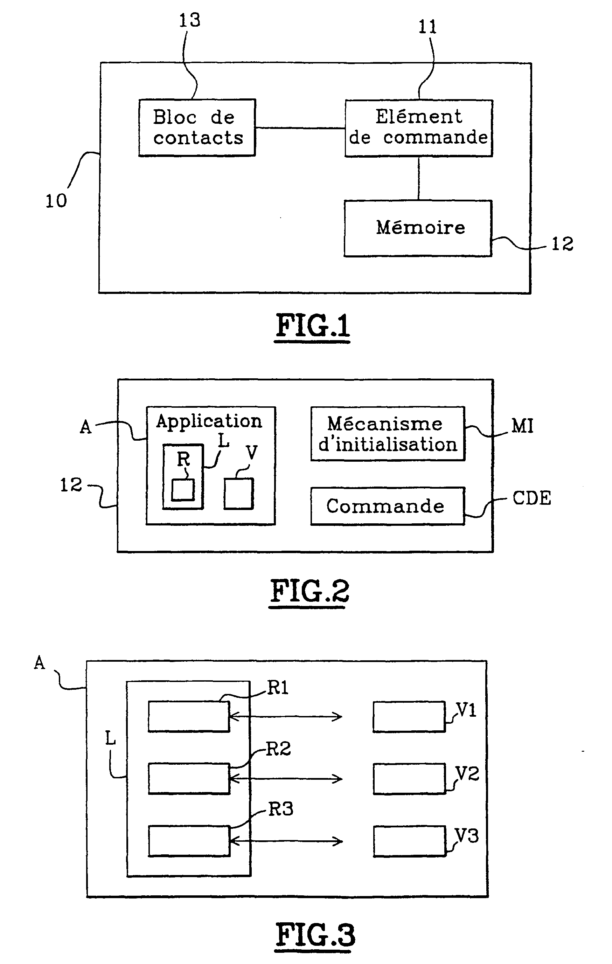

Sur la figure 1 est représenté un dispositif 10 à circuit intégré, ici une carte à puce.

Cette carte 10 contient un élément 11 de commande (par exemple une unité centrale de traitement ou CPU), une mémoire 12 et un bloc 13 de contacts destiné à une connexion électrique avec par exemple un connecteur d'un lecteur de cartes.

Ladite mémoire 12 est représentée sur la figure 2. Elle comprend un programme applicatif A. Ledit programme A comprend au moins une variable configurable V et une liste L d'au moins un élément référence R. Ladite mémoire comporte, d'une part, au moins un moyen MI d'initialisation desdites variables V, ledit moyen étant paramétré par plusieurs paramètres dont l'un des paramètres est ladite liste L d'éléments références, et, d'autre part, une commande CDE permettant d'envoyer des données contenant en particulier des valeurs à affecter aux variables configurables. Le moyen MI est une fonction ou un bout de programme. Sur la figure 3, le programme applicatif A comporte trois variables configurables V1, V2 et V3 et une liste L contenant trois éléments références R1, R2 et R3.

Afin que le programme A se déroule correctement, il faut configurer ses variables, c'est à dire leur affecter des valeurs.

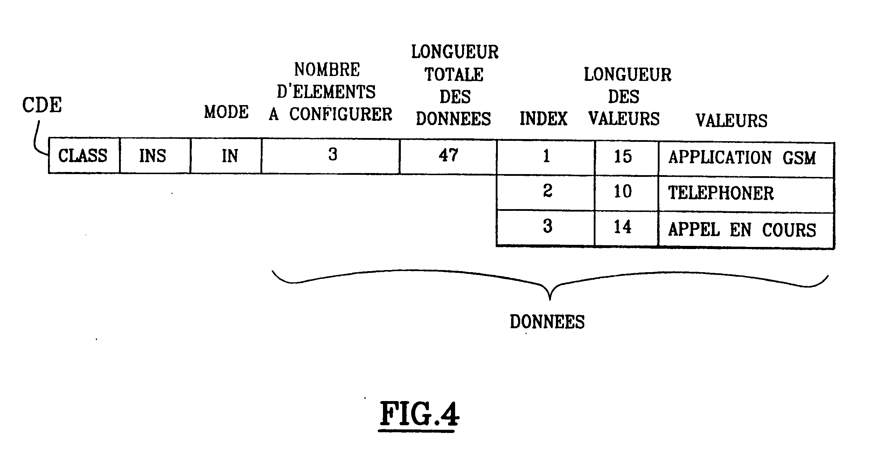

Dans une première étape, la commande CDE est envoyée à la carte 10. Elle comporte des données telles que par exemple, un nombre d'éléments références R, des numéros indexant les éléments références d'une liste, des valeurs associées.... Sur la figure 4, la commande CDE envoie les trois valeurs alphanumériques suivantes APPLICATION GSM, TELEPHONER et APPEL EN COURS. Ces valeurs sont précédées des index 1, 2 et 3 qui correspondent à trois éléments références.

Lorsque le programme applicatif A reçoit la commande CDE, il est exécuté et la phase d'initialisation faisant appel au moyen MI commence.

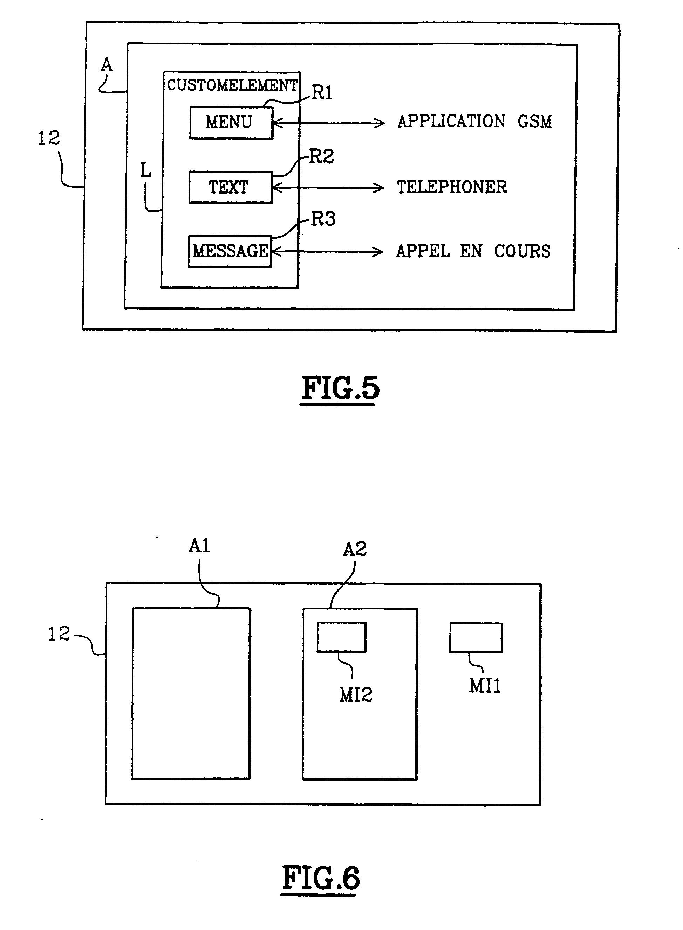

Dans une deuxième étape, on construit un lien entre les valeurs envoyées par la commande CDE et les éléments références d'une liste L spécifique. La liste L d'éléments références paramétrant le moyen MI d'initialisation permet d'établir ce lien. Les autres paramètres sont entre autres les données envoyées par ladite commande CDE. On spécifie la liste L en donnant par exemple son nom. Sur la figure 5, L est appelée CUSTOMELEMENT. Elle contient trois éléments références MENU, TEXT et MESSAGE auxquels sont associées les valeurs alphanumériques respectives APPLICATION GSM, TELEPHONER et APPEL EN COURS. Ces valeurs proviennent de la commande CDE.

Dans une troisième étape, le moyen MI d'initialisation établit un lien entre lesdites valeurs de ladite liste L et les variables à configurer V grâce aux éléments références R. A cet effet, un élément référence R fait référence à une variable configurable V. Sur la figure 3, R1, R2 et R3 font respectivement référence aux variables V1, V2 et V3, ces dernières étant des variables dont on veut initialiser tout ou partie de leur contenu. C'est grâce à ces différents liens que le transfert des valeurs vers lesdites variables s'effectue.

Une fois ce transfert effectué, la configuration du programme applicatif A est terminée et la suite dudit programme peut se dérouler comme souhaité. Le dispositif selon l'invention ne comporte aucun fichier, de ce fait, la configuration des variables a été directe.

On notera que l'invention prévoit également que ladite commande CDE permet de lire le contenu des variables configurables et ce grâce à la présence d'un paramètre de ladite commande appelé MODE qui indique si la commande doit envoyer ou lire des données. Ceci permet de lire les valeurs des variables V à tout moment et par conséquent de connaître la configuration du programme applicatif A à tout moment.

Il peut être intéressant pour gagner de l'espace mémoire et homogénéiser les initialisations de permettre à un ou plusieurs programmes applicatifs d'utiliser le même moyen MI d'initialisation. Aussi, au moins un moyen MI d'initialisation réside dans ladite mémoire indépendamment d'un programme applicatif A. Cela signifie que ledit moyen MI peut être utilisé par tous les programmes applicatifs résidents dans la carte 10 et n'est propre à aucun programme A en particulier. Comme le montre la figure 6, le moyen MI1 est indépendant des programmes applicatifs A1 et A2 et peut être de ce fait utilisé par l'un ou l'autre de ces programmes.

Cependant, il peut être également utile de pouvoir personnaliser le moyen d'initialisation pour un programme applicatif donné en ayant un moyen différent de MI1, par exemple dans le cas où l'on veut avoir un protocole d'échange de données différent de celui de MI1 c'est à dire un format de données d'initialisation différent. Comme le montre la figure 6, au moins un programme applicatif A2 comprend un moyen MI2 d'initialisation. Pour configurer les variables de A2, on aura le choix d'utiliser les moyens MI1 ou MI2 si lesdites variables respectent le format de données respectif desdits moyens.

On notera que l'on peut également n'avoir aucun moyen MI indépendant d'un programme applicatif, chaque moyen MI d'initialisation étant, dans ce cas, propre à un programme applicatif, ou au contraire n'avoir que des moyens indépendants.

La présente invention s'applique particulièrement à des programmes applicatifs qui sont programmés dans des langages de haut niveau tels qu'en particulier un langage appelé JAVA (marque déposée). Ce langage traite des notions de classe, d'héritage, d'attribut et de méthode bien connues de l'homme du métier.

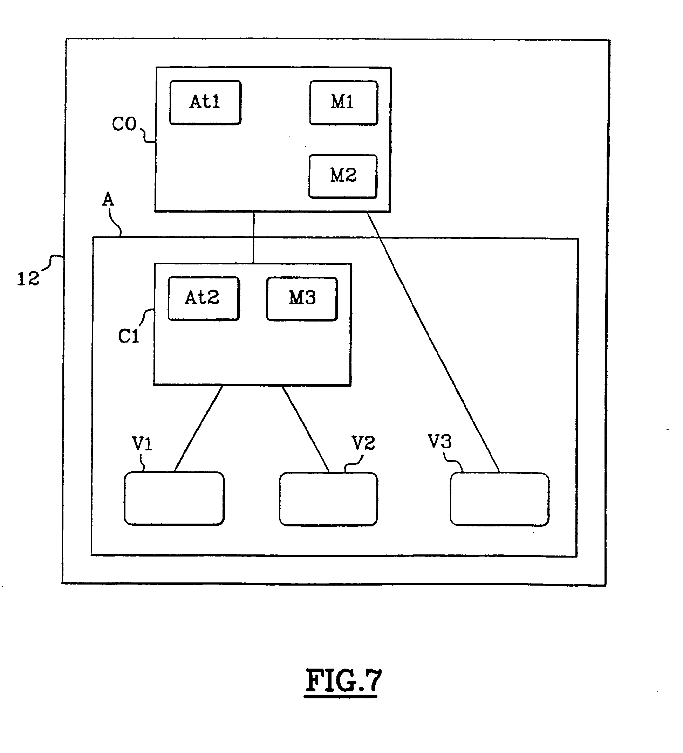

Dans le cas où le programme applicatif A est programmé en JAVA, les variables configurables sont des objets et une liste d'éléments références fait référence à un ensemble d'objets. Sur la figure 7, la mémoire 12 comprend un programme applicatif A. Ledit programme applicatif A comporte au moins deux variables V1 et V3 configurables référencées dans une même liste et qui dérivent d'une même classe mère C0. De plus, ledit programme applicatif A comporte au moins deux variables V1 et V2 configurables référencées dans une même liste et qui sont des instances d'une même classe C1. Les différentes classes sont définies soit dans le programme applicatif A, soit de façon indépendante, par exemple dans une librairie. Lesdites variables configurables sont persistantes dans ladite mémoire 12.

On peut voir que ladite liste L représente des objets ayant, soit des points en commun, les variables ou objets V1 et V3 héritent de l'attribut At1 et des méthodes M1 et M2 de la classe CO mais ont leur propres attributs et méthodes, soit tous leurs points en commun, V1 et V2 sont des instances de la classe C1 qui possède l'attribut At2 et la méthode M3. Pour configurer lesdits objets, il faut qu'une liste L soit du même type qu'une classe mère ou que la classe desdits objets. Ainsi un moyen MI1 simple permettra de configurer une partie du contenu des objets V1, V2 et V3, soit l'attribut At1. On pourrait également avoir un autre moyen MI2 plus complexe permettant de configurer l'ensemble des attributs At1 et At2 des variables V1 et V2.

C'est grâce à la définition du type de ladite liste L que la présente invention nous permet de modifier les valeurs des attributs d'objets bien spécifiés et d'empêcher ainsi la modification par inadvertance du contenu d'autres objets. De plus, grâce à la présente invention, il n'y a pas d'accès direct à l'emplacement mémoire contenant toutes les variables du programme applicatif A et, par suite, on ne risque pas de modifier de façon frauduleuse toutes ces variables.

Un autre avantage de la présente invention est que lesdites variables ou objets sont persistants en mémoire. Cela signifie qu'une fois configurés et lorsqu'ils ne sont pas modifiés pendant l'exécution du programme applicatif A, lesdits objets conservent leurs valeurs d'initialisation même après l'exécution du programme A. Si on ne veut pas modifier ces valeurs avant une autre exécution de A, il est inutile pour un utilisateur d'envoyer la commande CDE pour reconfigurer le programme applicatif A. Par suite, on s'affranchit de la phase d'initialisation et aucun moyen MI d'initialisation n'est déclenché. Par conséquent, le temps d'exécution est diminué.

Comme nous venons de le voir, le langage JAVA est intéressant à plus d'un égard, mais une de ses caractéristiques qui fait également sa force est qu'il possède des moyens sécuritaires dont un moyen qui vérifie que chaque instruction d'un programme applicatif A est valide ainsi que les paramètres de cette instruction. Par exemple, si une instruction nécessite un tableau d'octets situé à une certaine adresse de la mémoire 12 comme paramètre alors qu'une adresse mémoire interdite est désignée à la place, ledit moyen sécuritaire permettra de détecter cette erreur et d'empêcher ainsi l'accès à un espace mémoire interdit. Afin de profiter de ces moyens sécuritaires de vérification, l'invention prévoit que tout moyen MI d'initialisation est défini dans le même langage que ledit programme applicatif A, c'est à dire en JAVA. Ainsi, si un paramètre dudit moyen MI est faux, le programme ne sera pas exécuté et un fraudeur ne pourra accéder à des emplacements mémoire interdits.

## Revendications

1. Dispositif à circuit intégré (10) comprenant une mémoire (12) et au moins un programme applicatif résident dans ladite mémoire, **caractérisé en ce que** ledit programme applicatif (A) comprend au moins une variable configurable (V) et une liste d'au moins un élément référence (R), et **en ce que** ladite mémoire comporte, d'une part, au moins un moyen d'initialisation (MI) desdites variables, ledit moyen étant paramétré par plusieurs paramètres dont l'un des paramètres est ladite liste (L) d'éléments références, et, d'autre part, une commande (CDE) permettant d'envoyer des données contenant en particulier des valeurs à affecter aux variables configurables.

2. Dispositif selon la revendication 1, **caractérisé en ce que** lesdites variables configurables sont persistantes dans ladite mémoire.

3. Dispositif selon l'une des revendications précédentes, **caractérisé en ce qu'**un élément référence fait référence à une variable configurable.

4. Dispositif selon l'une des revendications précédentes, **caractérisé en ce que** ledit programme applicatif comporte au moins deux variables configurables référencées dans une même liste et qui dérivent d'une même classe mère.

5. Dispositif selon l'une des revendications précédentes, **caractérisé en ce que** ledit programme applicatif comporte au moins deux variables configurables référencées dans une même liste et qui sont des instances d'une même classe.

6. Dispositif selon l'une des revendications précédentes, **caractérisé en ce qu'**au moins un moyen d'initialisation réside dans ladite mémoire indépendamment d'un programme applicatif.

7. Dispositif selon l'une des revendications précédentes, **caractérisé en ce qu'**au moins un programme applicatif comprend un moyen d'initialisation.

8. Dispositif selon l'une des revendications précédentes, **caractérisé en ce que** tout moyen d'initialisation est défini dans le même langage que ledit programme applicatif.

9. Dispositif selon l'une des revendications précédentes, **caractérisé en ce que** ladite commande permet de lire le contenu des variables configurables.

10. Procédé d'initialisation d'un programme applicatif d'un dispositif à circuit intégré comprenant une mémoire et au moins un programme applicatif résident dans ladite mémoire, **caractérisé en ce que** ledit procédé comporte les étapes consistant à :
- créer, dans ledit programme applicatif, au moins une variable configurable et une liste d'au moins un élément référence,
- envoyer des données contenant en particulier des valeurs à affecter aux variables configurables,
- initialiser lesdites variables grâce à un moyen d'initialisation, ledit moyen étant paramétré par plusieurs paramètres dont l'un des paramètres est ladite liste d'éléments références.

## Claims

1. An integrated circuit device (10) comprising one memory (12) and at least one application programme residing in said memory, **characterised in that** said application programme (A) comprises at least one configurable variable (V) and one list of at least one reference element (R) and **in that** said memory comprises on the one hand at least one initialization means (MI) of said variables, said means being parameterized by several parameters of which one parameter being said reference elements list (L) and on the other hand one received instruction (CDE) transferring data containing in particular values to be allotted to the configurable variables.

2. The device according to claim 1, **characterised in that** said configurable variables are persistent in said memory.

3. The device according to one of the preceding claims, **characterised in that** one reference element refers to one configurable value.

4. The device according to one of the preceding claims, **characterised in that** said application programme comprises at least two configurable values referenced in one same list and that are derived from one same mother class.

5. The device according to one of the preceding claims, **characterised in that** said application programme comprises at least two configurable variables referenced in one same list and which are instances of one same class.

6. The device according to one of the preceding claims, **characterised in that** at least one initialisation means resides in said memory, independently from an application programme.

7. The device according to one of the preceding claims, **characterised in that** at least one application programme comprises one initialisation means.

8. The device according to one of the preceding claims, **characterised in that** each initialisation means is defined in the same language as said application programme.

9. The device according to one of the preceding claims, **characterised in that** said instruction allows reading the configurable variables content.

10. An application programme initialisation process of an integrated circuit device comprising one memory and at least one application programme residing in said memory, **characterised in that** said process comprises the steps consisting in:
- generating in said application programme at least one configurable variable and one list of at least one reference element
- transferring data containing in particular values to be allotted to configurable variables
- initialising said variables by an initialisation means, said means being parameterised by several parameters of which one parameter is said reference elements list.

## Patentansprüche

1. Vorrichtung mit integriertem Schaltkreis (10) mit einem Speicher (12) und wenigstens einem in dem genannten Speicher integrierten Anwenderprogramm, **dadurch gekennzeichnet, dass** das genannte Anwenderprogramm (A) wenigstens eine konfigurierbare Variable (V) und eine Liste wenigstens eines Bezugselements (R) umfasst und dass der genannte Speicher einerseits wenigstens ein Initialisierungsmittel (MI) der genannten Variablen umfasst, wobei das genannte Mittel durch mehrere Parameter parametriert wird, von denen ein Parameter die genannte Bezugszeichenliste (L) ist und andererseits eine insbesondere den konfigurierbaren Variablen zuzuordnende Werte enthaltende Daten versendende erhaltene Steuerung (CDE).

2. Vorrichtung gemäß Anspruch 1, **dadurch gekennzeichnet, dass** die genannten konfigurierbaren Variablen in dem genannten Speicher dauerhaft integriert sind.

3. Vorrichtung gemäß einem der vorherigen Ansprüche, **dadurch gekennzeichnet, dass** ein Bezugselement sich auf eine konfigurierbare Variable bezieht.

4. Vorrichtung gemäß einem der vorherigen Ansprüche, **dadurch gekennzeichnet, dass** das genannte Anwenderprogramm wenigstens zwei konfigurierbare Bezugsvariable in ein und derselben Liste umfasst, die aus ein und derselben Mutterklasse abgeleitet sind.

5. Vorrichtung gemäß einem der vorherigen Ansprüche, **dadurch gekennzeichnet, dass** das genannte Anwenderprogramm wenigstens zwei konfigurierbare, in ein und derselben Liste aufgenommene Variable umfasst, die Instanzen ein und derselben Klasse sind.

6. Vorrichtung gemäß einem der vorherigen Ansprüche, **dadurch gekennzeichnet, dass** wenigstens ein Initialisierungsmittel in dem genannten Speicher unabhängig von einem Anwenderprogramm integriert ist.

7. Vorrichtung gemäß einem der vorherigen Ansprüche, **dadurch gekennzeichnet, dass** wenigstens ein Anwenderprogramm ein Initialisierungsmittel umfasst.

8. Vorrichtung gemäß einem der vorherigen Ansprüche, **dadurch gekennzeichnet, dass** jedes Initialisierungsmittel in derselben Sprache definiert ist wie das genannte Anwenderprogramm.

9. Vorrichtung gemäß einem der vorherigen Ansprüche, **dadurch gekennzeichnet, dass** der genannte Auftrag das Auslesen des Inhaltes der konfigurierbaren Variablen erlaubt.

10. Initialisierungsverfahren eines Anwenderprogramms einer Vorrichtung mit integriertem Schaltkreis mit einem Speicher und wenigstens einem in dem genannten Speicher integrierten Anwenderprogramm, **dadurch gekennzeichnet, dass** das genannte Verfahren die Stufen umfasst, die aus Folgendem bestehen:
- Erstellung wenigstens einer konfigurierbaren Variablen und einer Liste wenigstens eines Bezugselements in dem genannten Anwenderprogramm,
- Versand der insbesondere den konfigurierbaren Variablen zuzuordnenden Werte enthaltenden Daten,
- Initialisierung der genannten Variablen dank eines Initialisierungsmittels, wobei das genannte Mittel durch mehrere Parameter parametriert wird, von denen einer der Parameter die genannte Bezugselementliste ist.
